# EUROPEAN PATENT APPLICATION

(11) **EP 4 530 940 A1**
(43) Date of publication of application: **02.04.2025**
(21) Application number: 23826708.2
(22) Date of filing: 31.01.2023
(51) Int. Cl.: G06N 20/00, G06F 18/213, G06N 3/045, G06N 3/096

(54) **MACHINE LEARNING DEVICE, MACHINE LEARNING METHOD, AND MACHINE LEARNING PROGRAM**

(30) Priority: 21.06.2022 JP 2022099512
(71) Applicant: JVCKenwood Corporation, Yokohama-shi, Kanagawa 2210022 (JP)
(72) Inventor: YANG Yincheng, Yokohama-shi Kanagawa 221-0022 (JP)
(74) Representative: Pritzlaff, Stefanie Lydia
(86) International application number: PCT/JP2023/003053
(87) International publication number: WO 2023/248515

(57) **Abstract**

A machine learning apparatus that continually learns a novel class with fewer samples than a base class is provided. A feature extraction unit (10) extracts a feature of input data by using a weight trained based on a divided feature of the input data. A base class classification unit (20) classifies into a base class based on the feature of the input data. A novel class classification unit (40) classifies into a novel class based on the feature of the input data. An attention attractor unit (30) regularizes a weight of base class and a weight of novel class.

## Description

### TECHNICAL FIELD

The present invention relates to machine learning technologies.

### BACKGROUND ART

Human beings can learn new knowledge through experiences over a long period of time and can maintain old knowledge without forgetting it. Meanwhile, the knowledge of a convolutional neutral network (CNN) depends on the dataset used in learning. To adapt to a change in data distribution, it is necessary to re-learn CNN parameters in response to the entirety of the dataset. In CNN, the precision estimation for old tasks will be decreased as new tasks are learned. Thus, catastrophic forgetting cannot be avoided in CNN. Namely, the result of learning old tasks is forgotten as new tasks are being learned in continual learning.

Incremental learning or continual learning is proposed as a scheme to avoid catastrophic forgetting. Continual learning is a learning method that improves a current trained model to learn new tasks and new data as they occur, instead of training the model from scratch.

On the other hand, new tasks often have only a limited number of sample data items available. Therefore, few-shot learning has been proposed as a method to efficiently learn from a small amount of training data. In few-shot learning, instead of re-learning previously learned parameters, a novel task is learned by using a small number of additional parameters.

A method called incremental few-shot learning (IFSL) has been proposed, which combines continual learning, where a novel class is learned without catastrophic forgetting of the result of learning the base class, and few-shot learning, where a novel class with fewer examples as compared to the base class is learned (Non-Patent Literature 1). In incremental few-shot learning, the base class can be learned from a large-scale dataset, while the novel class can be learned from a small number of sample data items.

### RELATED-ART LITERATURE

### NON-PATENT LITERATURE

[Non-Patent Literature 1]: Ren, M., Liao, R., Fetaya, E., & Zemel, R. S. (2018). Incremental few-shot learning with attention attractor networks. arXiv preprint arXiv: 1810.07218
[Non-Patent Literature 2]: Zhang, C., Cai, Y., Lin, G., & Shen, C. (2020). DeepEMD: Differentiable earth mover's distance for few-shot learning. arXiv preprint arXiv: 2003.06777
[Non-Patent Literature 3]: Watanabe, T., & Wolf, D. F. (2021). Image classification in frequency domain with 2SReLU: a second harmonics superposition activation function. Applied Soft Computing, 112, 107851

### SUMMARY OF INVENTION

An attention attractor network described in Non-Patent Literature 1 is known as a incremental few-shot learning method. In an attention attractor network, the performance of a base class classifier severely affects the novel class classifier and the attention attractor. The related-art attention attractor network does not use a local feature of an image when the base class classifier is trained, and so there has been room for improvement in the classification performance of the base class classifier.

Further, DeepEMD described in Non-Patent Literature 2 is known as a few-shot learning method. DeepEMD uses a distance measurement means called EMD (Earth Mover Distance) to compare local features of images and performs image classification. There is room for improvement in the classification performance of DeepEMD in the case the number of training data items is small.

The present invention addresses the issue described above, and a purpose thereof is to provide a machine learning technology capable of improving the classification performance of a classifier by utilizing a local feature of input data. Another purpose is to provide a machine learning technology capable of improving the recognition accuracy in learning by using frequency domain information on input data.

A machine learning apparatus according to an embodiment is a machine learning apparatus that continually learns a novel class with fewer samples than a base class, including: a feature extraction unit that extracts a feature of input data by using a weight trained based on a divided feature of the input data; a base class classification unit that classifies into a base class based on the feature of the input data; a novel class classification unit that classifies into a novel class based on the feature of the input data; and an attention attractor that regularizes a weight of base class classification and a weight of novel class classification.

Another mode of the embodiment relates to a machine learning method. The method is a machine learning method that continually learns a novel class with fewer samples than a base class, including: extracting a feature of input data by using a weight trained based on a divided feature of the input data; classifying into a base class based on the feature of the input data; classifying into a novel class based on the feature of the input data; and regularizing a weight of base class classification and a weight of novel class classification.

Optional combinations of the aforementioned constituting elements, and implementations of the embodiments in the form of methods, apparatuses, systems, recording mediums, and computer programs may also be practiced as modes of the embodiments.

In accordance with one embodiment, the classification performance of a classifier can be improved by utilizing a local feature of input data. In accordance with a further embodiment, the recognition accuracy in learning can be improved by using frequency domain information on input data.

### BRIEF DESCRIPTION OF DRAWINGS

[Fig. 1] Fig. 1 shows a configuration of an attention attractor network.
[Fig. 2] Figs. 2A and 2B show two-stage training.
[Fig. 3] Fig. 3 shows a configuration of the machine learning apparatus.
[Fig. 4] Figs. 4A-4C show the first stage training of Fig. 2A by breaking down the stage into three further stages (1.1 stage, 1.2 stage, 1.3 stage).
[Fig. 5] Figs. 5A and 5B show the second stage training of Fig. 2B by breaking down the stage into two further stages (2.1 stage, 2.2 stage).
[Fig. 6] Fig. 6 shows a configuration of the data control unit of Fig. 3.
[Fig. 7] Fig. 7 shows a configuration and an operation of the learning unit of Fig. 3 of the 1.1 stage.
[Fig. 8] Fig. 8 shows a configuration and an operation of the learning unit of Fig. 3 of the 1.2 stage.
[Fig. 9] Fig. 9 shows a configuration and an operation of the learning unit of Fig. 3 of the 1.3 stage.
[Fig. 10] Fig. 10 shows a configuration and an operation of the learning unit of Fig. 3 of the 2.1 stage.
[Fig. 11] Fig. 11 shows a configuration and an operation of the learning unit of Fig. 3 of the 2.2 stage.

### DESCRIPTION OF EMBODIMENTS

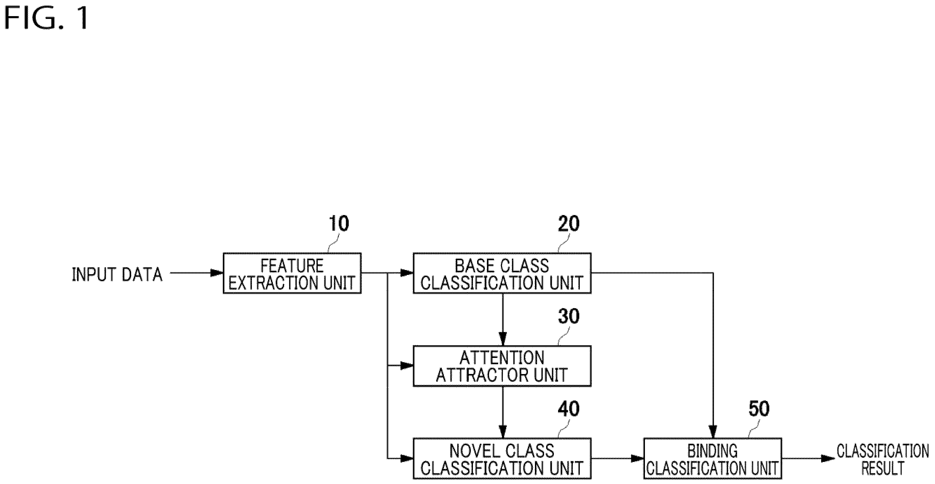

Fig. 1 shows a configuration of an attention attractor network. The attention attractor network includes a feature extraction unit 10, a base class classification unit 20, an attention attractor unit 30, a novel class classification unit 40, and a binding classification unit 50.

The attention attractor network is one of the representative methods of dynamic few-shot learning (DFSL), and the base class classification unit 20 and the novel class classification unit 40 can be coordinated by using the attention attractor.

The feature extraction unit 10 includes a backbone CNN. The backbone CNN is a convolutional neural network and extracts a feature of input data. The feature of the input data extracted by the backbone CNN is supplied to the base class classification unit 20, the attention attractor unit 30, and the novel class classification unit 40.

The base class classification unit 20 includes a base class classifier and a base class classification weight. The base class dataset is used as training data to pre-train the feature extraction unit 10 and the base class classification unit 20. The base class dataset contains a large number of samples. One example of a sample is an image but the sample is not limited thereto. The base class classification weight is a weight vector of the base class classifier and indicates an average feature amount of the samples of the base class dataset.

The novel class classification unit 40 includes a novel class classifier and a novel class classification weight for continuous learning of a novel class. The novel class classification unit 40 post-trains a novel class dataset. The number of samples included in the novel class dataset is smaller than the number of samples included in the base class dataset. The novel class classification weight is a weight vector of the novel class classifier and indicates an average feature amount of the samples of the novel class dataset.

Based on the premise that the training data for the base class cannot be used for continuous learning, the attention attractor unit 30 controls training such that the knowledge learned in the base class dataset is not forgotten and the inference result is not biased toward the novel class when the novel class dataset is continuously trained.

The attention attractor unit 30 regularizes the base class classification weight and the novel class classification weight so that they can be compared on a common feature space. The attention attractor unit 30 calculates information on the regularization term added to the cross-entropy loss of the classification by using information on the base class provided by the base class classification unit 20 and supplies the calculated information to the novel class classification unit 40. The novel class classification unit 40 updates the novel class classification weight to minimize the regularized cross-entropy loss determined by adding the cross-entropy loss and the regularization term.

The binding classification unit 50 binds the classification result by the base class classification unit 20 and the classification result by the novel class classification unit 40 and outputs a final classification result.

In this embodiment, the performance for discrimination is improved by improving the method of training the feature extraction unit 10, the base class classification unit 20, and the novel class classification unit 40, but the attention attractor network is trained by the related-art method.

In this embodiment, the first stage training is performed to train the feature extraction unit 10 and the base class classification unit 20 with the input data for the base class, and the second stage training is performed to train the novel class classification unit 40 and the attention attractor unit 30 with the input data for the novel class.

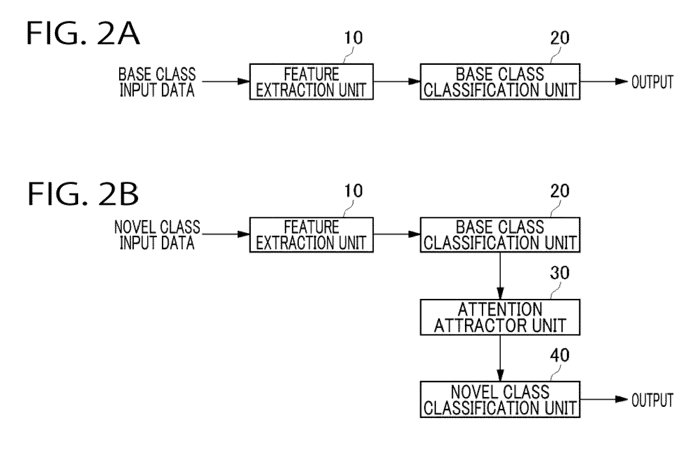

Figs. 2A and 2B show two-stage training. Fig. 2A shows the first stage training, in which the feature extraction unit 10 and the base class classification unit 20 are trained by using the input data for the base class. Fig. 2B shows the second stage training, in which the weights of the feature extraction unit 10 and the base class classification unit 20 trained in the first stage training are fixed, and the base class classification unit 20 and the novel class classification unit 40 are coordinated by the attention attractor unit 30 to train the novel class classification unit 40 and the attention attractor unit 30 by using the input data for the novel class.

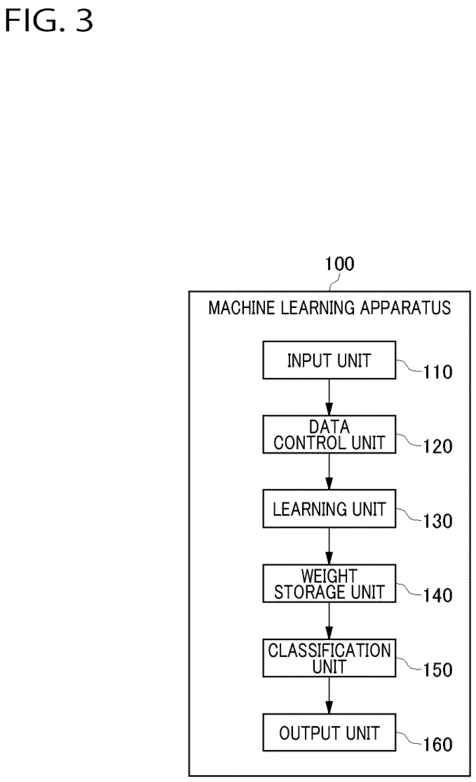

Fig. 3 shows a configuration of the machine learning apparatus 100. The machine learning apparatus 100 includes an input unit 110, a data control unit 120, a learning unit 130, a weight storage unit 140, a classification unit 150, and an output unit 160.

The input unit 110 supplies the input training data to the data control unit 120. The data control unit 120 categorizes the training data into a base class and a novel class based on the label and feeds the resultant data to the learning unit 130.

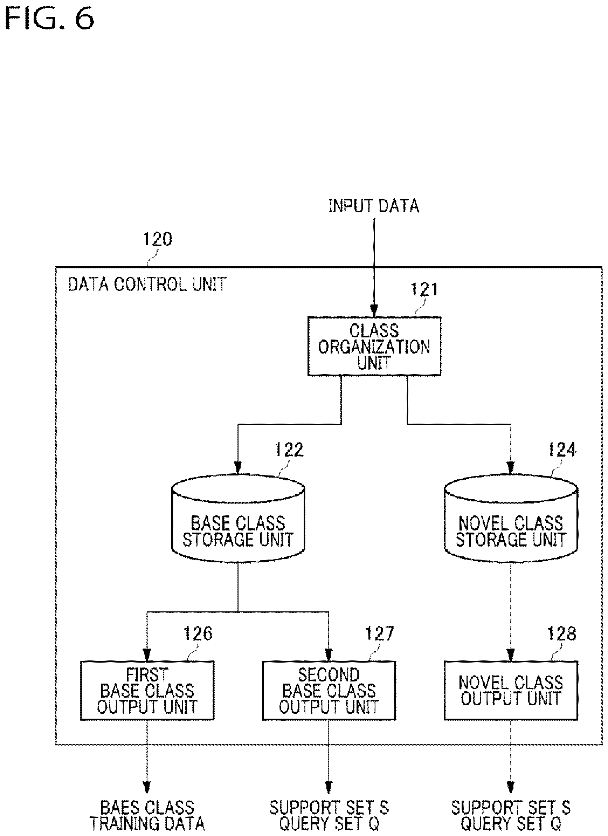

The configuration and the operation of the data control unit 120 will be described in detail with reference to Fig. 6.

Fig. 6 shows a configuration of the data control unit 120. The data control unit 120 includes a class organization unit 121, a base class storage unit 122, a novel class storage unit 124, a first base class output unit 126, a second base class output unit 127, and a novel class output unit 128.

The class organization unit 121 divides the input data into a base class and a novel class based on the label and stores the data for the base class in the base class storage unit 122 and the data for the novel class in the novel class storage unit 124.

The first base class output unit 126 generates base class training data for learning the base class from the input data for the base class stored in the base class storage unit 122 and outputs the generated data.

The second base class output unit 127 generates an episode comprised of a support set S and a query set Q by using the input data for the base class stored in the base class storage unit 122 and outputs the generated episode.

The novel class output unit 128 generates an episode comprised of a support set S and a query set Q by using the input data for the novel class stored in the novel class storage unit 124 and outputs the generated episode.

Referring back to Fig. 3, the configuration of the machine learning apparatus 100 will be described.

The learning unit 130 includes the feature extraction unit 10, the base class classification unit 20, the attention attractor unit 30, and the novel class classification unit 40 of Fig. 1 and uses these for training. The learning unit 130 stores the weights of the feature extraction unit 10, the base class classification unit 20, and the novel class classification unit 40 in the weight storage unit 140.

The classification unit 150 controls the feature extraction unit 10, the base class classification unit 20, and the novel class classification unit 40 of Fig. 1 and performs classification by binding the classification results of the base class classification unit 20 and the novel class classification unit 40 by using the weights stored in the weight storage unit 140. The output unit 160 outputs the result of classification.

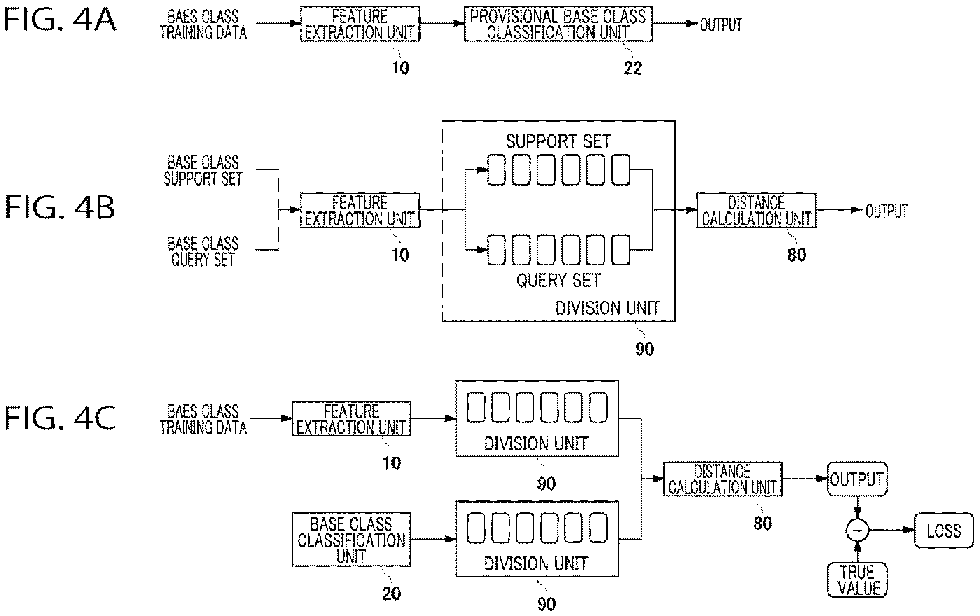

Figs. 4A-4C show the first stage training of Fig. 2A by breaking down the stage into three further stages (1.1 stage, 1.2 stage, 1.3 stage).

Fig. 4A shows the 1.1 stage training. The feature extraction unit 10 extracts a feature by using the base class training data as input data and feeds the extracted feature to a provisional base class classification unit 22. The provisional base class classification unit 22 classifies the input data based on the feature and outputs the classification result.

The provisional base class classification unit 22 includes a multilayer neural network, which is the base class classifier, and the base class classification weight. The base class dataset is used as the training data to pre-train a set comprised of the feature extraction unit 10 and the provisional base class classification unit 22.

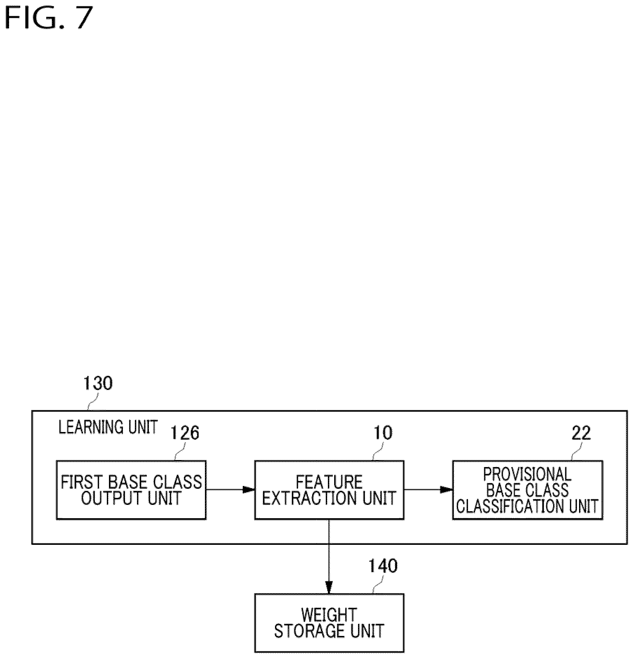

Fig. 7 shows a configuration and an operation of the learning unit 130 of the 1.1 stage. The first base class output unit 126 feeds the base class training data to the feature extraction unit 10. The feature extraction unit 10 extracts a feature from the input data and feeds the feature to the provisional base class classification unit 22. The provisional base class classification unit 22 classifies the input data based on the input feature. The classification result and the true value are compared, and the weights of the feature extraction unit 10 and the provisional base class classification unit 22 are trained to minimize the loss.

After the training in the 1.1 stage, the provisional base class classification unit 22 is discarded, but the weights of the feature extraction unit 10 trained in the training in the 1.1 stage are stored in the weight storage unit 140 and inherited by the 1.2 stage.

Fig. 4B shows the training in the 1.2 stage. The feature extraction unit 10 extracts a feature by using the support set S and the query set Q of the base class as input data.

A division unit 90 divides the feature output by the feature extraction unit 10 into a plurality of domains. In general, information on an image can be expressed either in the spatial domain or the frequency domain. Thus, the image feature is divided into the spatial domain and the frequency domain.

For division into the frequency domain, a cosine converter is used to convert the feature from the feature space into the frequency domain and divides the feature into multiple parts in the frequency domain, for example. For example, the feature is divided into six frequency domains, from low-frequency components to high-frequency components. In the frequency domain, data is described by a synthesis of frequency components. High-frequency components are directly related to the detail and noise. In images, high-frequency components are important to define contours and borders. In some tasks such as image classification, however, the outline of an object is not important information (Non-Patent Literature 3). For this reason, it is possible to improve the performance for discrimination by dividing the feature into a plurality of frequency domains from low frequency components to high frequency components and using the divided feature for classification.

The distance calculation unit 80 calculates a similarity between the divided image features as a distance. EMD is one of the methods for calculating a similarity between image features as a distance. Given two sets A and B of two feature amount, the distance between the sets A and B of feature amount can be determined based on the distance between the feature of set A and the feature of set B.

For example, the support set S and the query set Q are given as input data, and each is divided into 9 domains by way of example.

The number of domains and the range of domain in frequency division should be the same for the support set and the query set. In other words, if the support set is divided into three domains, the query set should also be divided into three domains. In the case of division into three domains, the ranges of domain are, for example, 0 to 10 Hz, 10 to 20 Hz, and 10 to 30 Hz for both the support set and the query set. It is desirable that the range of frequency subject to division is 0 to 30 Hz, and the range of 30 Hz or higher is desirably left out of the calculation. Alternatively, however, the range of 30 Hz or higher may be subject to division and used for distance calculation.

The number of frequency domains resulting from division and the range of domain may always be the same for each task, but they may also be different. Shown above are exemplary ranges of domain in the case of three domains. In another task, the number of domains may be 2, and the feature may be divided into 0 to 15 Hz and 15 to 30 Hz, for example. Therefore, the number of domains and the range of domain may be determined individually for each task so long as the number of domains and the range of domain are the same for the support set and the query set.

A distance calculation is made between each domain of the support set S and each domain of the query set Q, and the results of calculations are combined to determine a loss. The parameters of the classifiers are trained to minimize the loss. Performing a distance calculation between each domain of the support set S and each domain of the query set Q means, for example, calculating, given the domains of the support set S are A, B and the domains of the query set Q are C, D, distances between A and C, A and D, B and C, B and D. The synthesis of the results of calculating the distance represents a loss. Specifically, a distance measurement means called DeepEMD described in Non-Patent Literature 2 can be used.

The input data is classified based on the distance calculation result output by the distance calculation unit 80, the classification result and the true value are compared, and the weight of the feature extraction unit 10 is trained to minimize the loss.

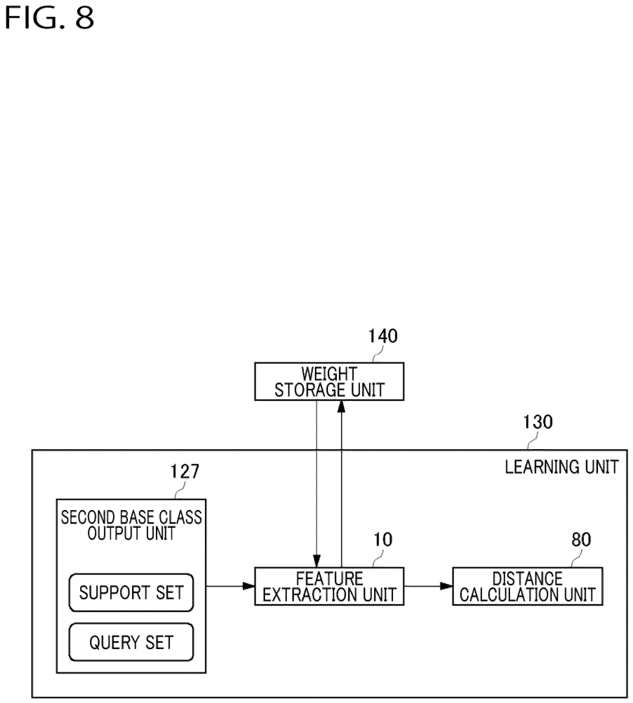

Fig. 8 shows a configuration and an operation of the learning unit 130 of the 1.2 stage. The weight of the feature extraction unit 10 trained in the 1.1 stage is read from the weight storage unit 140 and is reused as the initial value of the weight of the feature extraction unit 10 in the 1.2 stage.

The second base class output unit 127 feeds episodic input data comprised of the support set S and the query set Q of the base class to the feature extraction unit 10. The feature extraction unit 10 extracts a feature from the input data and feeds the feature divided into a plurality of domains to the distance calculation unit 80. The distance calculation unit 80 performs a distance calculation between the data for the support set divided into a plurality of frequency domains and the data for the query set divided into a plurality of frequency domains and synthesizes the results of distance calculation to determine a loss. The weight of the feature extraction unit 10 is retrained to minimize the loss. The weight of the feature extraction unit 10 trained in the 1.2 stage is stored in the weight storage unit 140.

Fig. 4C shows the 1.3 stage training. The feature extraction unit 10 extracts a feature by using the base class training data as input data. The base class classification unit 20 outputs a representative feature representative of the characteristics of all classes in the base class without input data under the initial value of a random weight.

The division unit 90 divides the feature extracted by the feature extraction unit 10 into a plurality of domains and divides the representative feature output by the base class classification unit 20 into a plurality of domains.

The distance calculation unit 80 calculates and synthesizes the distances between a plurality of features extracted by the feature extraction unit 10 and a plurality of representative features output by the base class classification unit 20 and classifies the input data into a class resulting in the minimum synthesized distance. The classification result and the true value are compared, and the weight of the base class classification unit 20 is trained to minimize the loss.

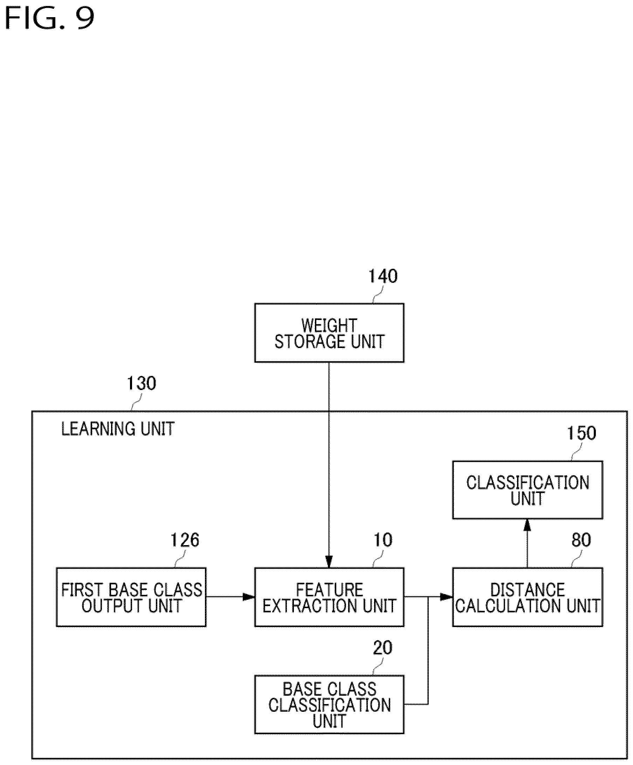

Fig. 9 shows a configuration and an operation of the learning unit 130 of the 1.3 stage. The weight of the feature extraction unit 10 trained in the 1.2 stage is read from the weight storage unit 140 and is set as the weight of the feature extraction unit 10 of the 1.3 stage. In the 1.3 stage, the weight of the feature extraction unit 10 is not trained and is fixed. A random initial value is set as the weight of the base class classification unit 20, and the weight of the base class classification unit 20 is trained so that the feature output from the base class classification unit 20 approaches the feature extracted by the feature extraction unit 10.

The first base class output unit 126 feeds the base class training data to the feature extraction unit 10. The feature extraction unit 10 extracts a feature from the input data for the base class, divides the feature into a plurality of domains, and feeds the divided feature to the distance calculation unit 80. The base class classification unit 20 outputs a representative feature representative of all classes in the base class, divides the representative feature into a plurality of domains, and feeds the divided feature to the distance calculation unit 80. The distance calculation unit 80 calculates and synthesizes the distances between a plurality of features extracted by the feature extraction unit 10 and a plurality of representative features output by the base class classification unit 20 and feeds the synthesized result to the classification unit 150. The classification unit 150 classifies the input data based on the synthesized distance calculation result, compares the classification result with the true value, and trains the weight of the base class classification unit 20 to minimize the loss.

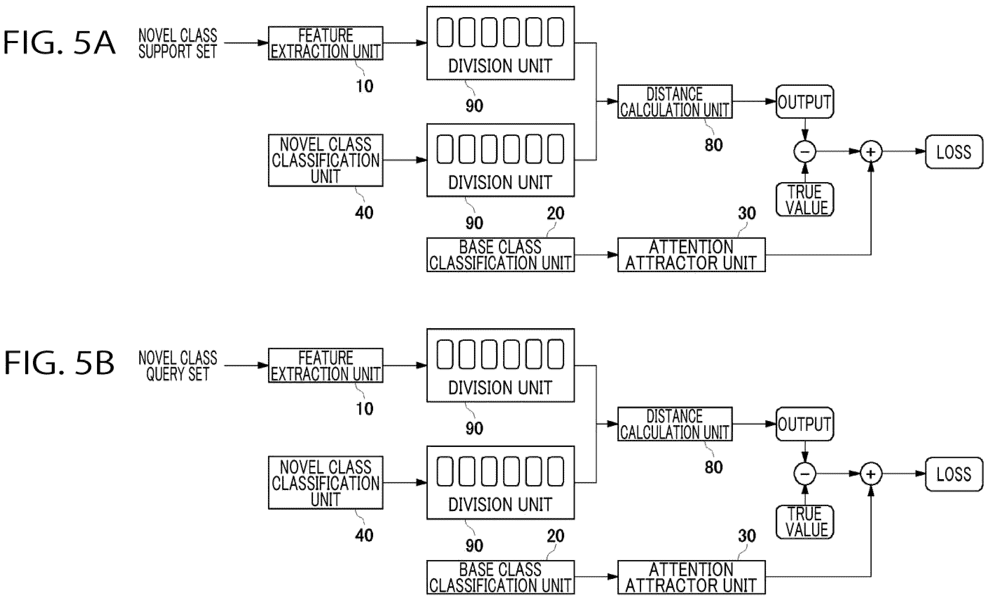

Figs. 5A and 5B show the second stage training of Fig. 2B by breaking down the stage into two further stages (2.1 stage, 2.2 stage). The 2.1 stage is called inner learning, and the 2.2 stage is called outer learning.

Fig. 5A shows the 2.1 stage training. In the 2.1 stage, the weight of the attention attractor unit 30 is fixed, and the weight of the novel class classification unit 40 is trained by using the support set S of the novel class.

The feature extraction unit 10 extracts a feature by using the novel class support set S as input data. The novel class classification unit 40 outputs a representative feature representative of the characteristics of all classes in the novel class without input data under the initial value of a random weight.

The division unit 90 divides the feature extracted by the feature extraction unit 10 into a plurality of domains and divides the representative feature output by the novel class classification unit 40 into a plurality of domains.

The distance calculation unit 80 calculates and synthesizes the distances between a plurality of features extracted by the feature extraction unit 10 and a plurality of representative features output by the novel class classification unit 40 and classifies the input data into a class resulting in the minimum synthesized distance. The output value of the attention attractor unit 30 is added to the difference between the classification result and the true value to determine the loss, and the weight of the novel class classification unit 40 is trained to minimize the loss.

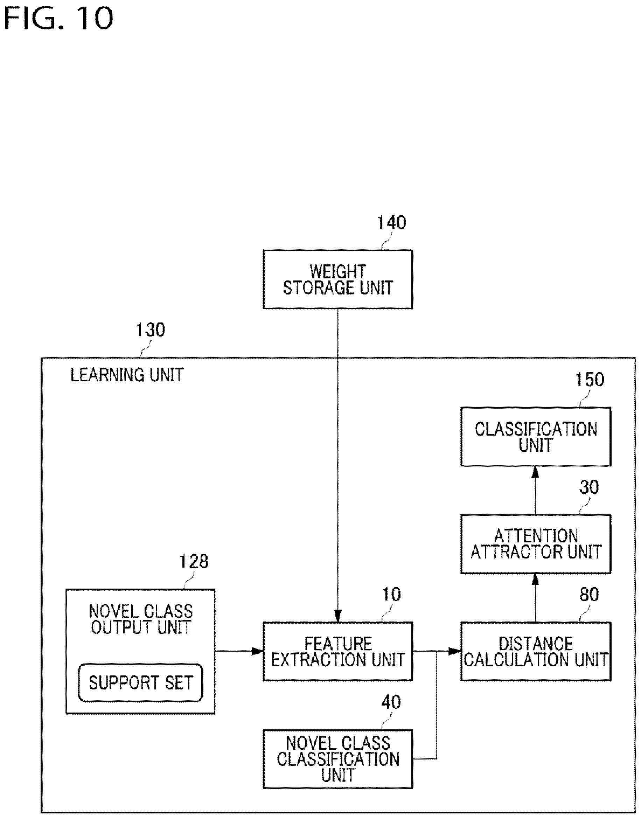

Fig. 10 shows a configuration and an operation of the learning unit 130 of the 2.1 stage. The trained weight stored in the weight storage unit 140 in the first stage is set in the feature extraction unit 10. The base class classification unit 20 has also been trained in the first stage. A random initial value is set as the weight of the novel class classification unit 40.

In inner learning, the novel class output unit 128 feeds the support set S of the novel class to the feature extraction unit 10. The feature extraction unit 10 extracts a feature from the input data for the novel class, divides the feature into a plurality of domains, and feeds the divided feature to the distance calculation unit 80. The novel class classification unit 40 outputs a representative feature representative of all classes in the novel class, divides the representative feature into a plurality of domains, and feeds the divided feature to the distance calculation unit 80. The distance calculation unit 80 calculates and synthesizes the distances between a plurality of features extracted by the feature extraction unit 10 and a plurality of representative features output by the novel class classification unit 40. The attention attractor unit 30 calculates the loss by adding the result of the attention attractor network to the output value of the distance calculation unit 80. The classification unit 150 outputs the classification result and trains the novel class classification unit 40 to minimize the loss.

Fig. 5B shows the 2.2 stage training. In the 2.2 stage, the weight of the novel class classification unit 40 is fixed, and the weight of the attention attractor unit 30 is trained by using the query set Q of the novel class.

The feature extraction unit 10 extracts a feature by using the query set Q of the novel class as input data. The novel class classification unit 40 outputs a representative feature representative of the features of all classes in the novel class without input data.

The division unit 90 divides the feature extracted by the feature extraction unit 10 into a plurality of domains and divides the representative feature output by the novel class classification unit 40 into a plurality of domains.

The distance calculation unit 80 calculates and synthesizes the distances between a plurality of features extracted by the feature extraction unit 10 and a plurality of representative features output by the novel class classification unit 40 and classifies the input data into a class resulting in the minimum synthesized distance. The output value of the attention attractor unit 30 is added to the difference between the classification result and the true value to determine the loss, and the weight of the attention attractor unit 30 is trained to minimize the loss.

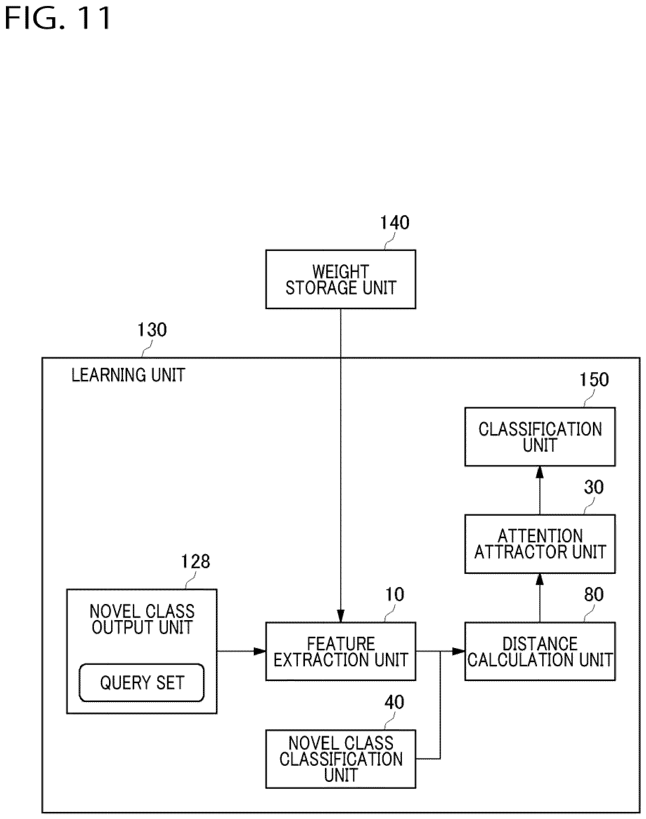

Fig. 11 shows a configuration and an operation of the learning unit 130 of the 2.2 stage. The trained weight stored in the weight storage unit 140 in the first stage is set in the feature extraction unit 10.

In outer learning, the novel class output unit 128 feeds the query set Q of the novel class to the feature extraction unit 10. The feature extraction unit 10 extracts a feature from the input data for the novel class, divides the feature into a plurality of domains, and feeds the divided feature to the distance calculation unit 80. The novel class classification unit 40 outputs a representative feature representative of all classes in the novel class, divides the representative feature into a plurality of domains, and feeds the divided feature to the distance calculation unit 80. The distance calculation unit 80 calculates and synthesizes the distances between a plurality of features extracted by the feature extraction unit 10 and a plurality of representative features output by the novel class classification unit 40. The attention attractor unit 30 calculates the loss by adding the result of the attention attractor network to the output value of the distance calculation unit 80. The classification unit 150 outputs the classification result and trains the attention attractor unit 30 to minimize the loss.

The 2.1 stage and the 2.2 stage are for training of one episode. Since there are typically hundreds of episodes, the stage 2.1 and the 2.2 stage are repeated hundreds of times. At each session of inner learning, the novel class classification unit 40 is trained with the initial value, but the weight in the previous session is inherited as the weight of the attention attractor unit 30 and is trained.

The above-described various processes in the machine learning apparatus 100 can of course be implemented by hardware-based devices such as a CPU and a memory and can also be implemented by firmware stored in a read-only memory (ROM), a flash memory, etc., or by software on a computer, etc. The firmware program or the software program may be made available on, for example, a computer readable recording medium. Alternatively, the program may be transmitted and received to and from a server via a wired or wireless network. Still alternatively, the program may be transmitted and received in the form of data broadcast over terrestrial or satellite digital broadcast systems.

As described above, according to this embodiment, the accuracy of discrimination can be improved by dividing the feature of the input data into a plurality of domains and classifying the input data by using a plurality of local features. Further, by dividing the feature of the input data into a plurality of frequency domains, the accuracy of discrimination can be improved.

Described above is an explanation based on an exemplary embodiment. The embodiment is intended to be illustrative only and it will be understood by those skilled in the art that various modifications to combinations of constituting elements and processes are possible and that such modifications are also within the scope of the present invention.

### INDUSTRIAL APPLICABILITY

The present invention can be applied to machine learning technologies.

### REFERENCE SIGNS LIST

10 feature extraction unit, 20 base class classification unit, 22 provisional base class classification unit, 30 attention attraction unit, 40 novel class classification unit, 50 binding classification unit, 80 distance calculation unit, 90 division unit, 100 machine learning apparatus, 110 input unit, 120 data control unit, 121 class organization unit, 122 base class storage unit, 124 novel class storage unit, 126 first base class output unit, 127 second base class output unit, 128 novel class output unit, 130 learning unit, 140 weight storage unit, 150 classification unit, 160 output unit

## Claims

1. A machine learning apparatus that continually learns a novel class with fewer samples than a base class, comprising:
a feature extraction unit that extracts a feature of input data by using a weight trained based on a divided feature of the input data;
a base class classification unit that classifies into a base class based on the feature of the input data;
a novel class classification unit that classifies into a novel class based on the feature of the input data; and
an attention attractor unit that regularizes a weight of base class classification and a weight of novel class classification.

2. The machine learning apparatus according to claim 1, further comprising:
a division unit that divides a feature of the input data into a plurality of frequency domains;
a distance calculation unit that performs distance calculation between data for a support set divided by the division unit into a plurality of frequency domains and data for a query set divided by the division unit into a plurality of frequency domains and synthesizes results of distance calculation; and
a learning unit that re-trains a weight of the feature extraction unit to minimize the result of distance calculation as synthesized by the distance calculation unit.

3. The machine learning apparatus according to claim 2,
wherein, when dividing the feature of the input data into a plurality of frequency domains, the division unit ensures that the number of domains and a range of domain for the support set is identical to the number of domains and a range of domain for the query set.

4. The machine learning apparatus according to claim 3, wherein the feature extraction unit extracts a feature of input data for a base class by using a re-trained weight,
wherein the base class classification unit outputs a representative feature representative of features of all classes in a base class,
wherein the distance calculation unit performs distance calculation between the feature of the input data for a base class extracted by the feature extraction unit and the representative feature of the base class output by the base class classification unit and outputs a classification result, and
wherein the learning unit compares the classification result output by the distance calculation unit with a true value and trains a weight of the base class classification unit to minimize a loss.

5. The machine learning apparatus according to claim 4, wherein the learning unit alternately repeats:
inner learning in which a weight of the attention attractor unit is fixed, and the weight of the novel class classification unit is trained by using a feature of data for a support set of a novel class, and
outer learning in which a weight of the novel class classification unit is fixed, and the weight of the attention attractor unit is trained by using a feature of data for a query set of a novel class.

6. A machine learning method that continually learns a novel class with fewer samples than a base class, comprising:
extracting a feature of input data by using a weight trained based on a divided feature of the input data;
classifying into a base class based on the feature of the input data;
classifying into a novel class based on the feature of the input data; and
regularizing a weight of base class classification and a weight of novel class classification.

7. A machine learning program that continually learns a novel class with fewer samples than a base class, comprising computer-implemented modules including:
a feature extraction module that extracts a feature of input data by using a weight trained based on a divided feature of the input data;
a base class classification module that classifies into a base class based on the feature of the input data;
a novel class classification module that classifies into a novel class based on the feature of the input data; and
an attention attractor module that regularizes a weight of base class classification and a weight of novel class classification.
